# EUROPÄISCHE PATENTSCHRIFT

(11) **EP 3 687 861 B1**
(45) Veröffentlichungstag und Bekanntmachung des Hinweises auf die Patenterteilung: **21.12.2022**
(21) Anmeldenummer: 18736884.0
(22) Anmeldetag: 02.07.2018
(51) Int. Cl.: B60R 11/00, B60R 19/48, B60W 30/06

(54) **ANORDNUNG EINES EINE SENSORAKTIVE FLÄCHE AUFWEISENDEN SENSORS AN EINEM FAHRZEUGAUSSENANBAUTEIL**
ARRANGEMENT OF A SENSOR COMPRISING A SENSOR ACTIVE SURFACE ON A VEHICLE OUTER ADD-ON PART
AGENCEMENT D'UN CAPTEUR, POURVU D'UNE SURFACE ACTIVE, SUR UN COMPOSANT EXTÉRIEUR D'UN VÉHICULE

(30) Priorität: 27.09.2017 DE 102017009057
(43) Veröffentlichungstag der Anmeldung: 05.08.2020
(73) Patentinhaber: Audi AG, 85045 Ingolstadt (DE)
(72) Erfinder: SCHULZ, Markus, 85080 Gaimersheim (DE)
(86) Internationale Anmeldenummer: PCT/EP2018/067814
(87) Internationale Veröffentlichungsnummer: WO 2019/063152

(56) Entgegenhaltungen:
- DE-A1- 19 816 826
- DE-A1- 19 945 075
- DE-A1-102007 005 322
- DE-A1-102009 048 173

## Beschreibung

Die Erfindung betrifft eine Anordnung eines eine sensoraktive Fläche aufweisenden Sensors an einem oder hinter einem Außenanbauteil eines Fahrzeugs gemäß dem Patentanspruch 1.

Aus dem Stand der Technik sind Anordnungen von Sensoren für Fahrerassistenzsysteme, Notbremsassistenten usw. bekannt, die an einer Fahrzeugfront oder einem Fahrzeugheck im Bereich eines Stoßfängers verbaut sind. Solche Sensoren sind bspw. Näherungssensoren, wie Parksensoren oder Abstandssensoren sowie Radare, Nachtsichtkameras, Laserscanner usw.

Diese Sensoren weisen an der Vorderseite meistens eine aktive Sensorfläche auf und werden bspw. in entsprechende Öffnungen der Außenverkleidung des Stoßfängers derart eingebaut, dass die aktive Sensorfläche mit der Außenverkleidung flächenbündig ist. In nachteiliger Weise können solche Sensoren, die sehr teuer sind, bei sogenannten Parkremplern während eines Einparkvorganges, also bei schwachen Kollisionen, beschädigt werden, wodurch hohe Reparaturkosten nicht auszuschließen sind. Ferner bestehen unter bestimmten Rahmenbedingungen gesetzliche Anforderungen, die die Beschädigungen bestimmter Sensoren bei Parkremplern verbieten. Dies führt zu Verbaupositionen, die hinsichtlich der Sensorfunktion ungünstig sind und auch designerische Nachteile haben.

Aus der gattungsbildenden DE 10 2007 005 322 A1 ist eine Anordnung eines eine sensoraktive Fläche aufweisenden Sensors an einem oder hinter einem Außenanbauteil eines Fahrzeugs mit einer Sensorführung und einem Linearantrieb bekannt, bei welcher die Sensorführung zwei nichtparallele Führungsschienen zum translatorischen Verschieben des Sensors in Fahrzeugquerrichtung und zum gleichzeitigen Erzeugung einer Rotation des Sensors aufweist. Die Verschiebung des Sensors in Fahrzeugquerrichtung erfolgt mittels eines Linearantriebs zwischen einer Ruhestellung und einer Gebrauchsstellung. In der Gebrauchsstellung des Sensors befindet sich dessen aktive Fläche in einer Aussparung einer Sichtfläche des Fahrzeugs, so dass die aktive Fläche weitgehend in der Ebene der Sichtfläche bzw. bündig dazu angeordnet ist. In der Ruhestellung befindet sich der Sensor gegenüber der Aussparung in der Sichtfläche des Fahrzeugs in Fahrzeugquerrichtung versetzt, wobei die Aussparung mittels einer Abdeckung verschlossen ist. Die Abdeckung ist derart mit dem Sensor gekoppelt, dass mit dessen Bewegung zwischen der Ruhestellung und der Gebrauchsstellung die Abdeckung zwischen einer die Aussparung verschließenden Position und einer die Aussparung freigebenden Position bewegt wird. Mit dieser Anordnung soll eine optisch gefällige Integration des Sensors im Bereich der Sichtfläche des Fahrzeugs erreicht werden, ohne die Funktion des Sensors einzuschränken.

Die DE 10 2015 015 476 B3 beschreibt eine Crashstruktur für ein Fahrzeug mit einem Stoßfänger und einer am Stoßfänger angeordneten Sensoreinheit, wobei im Bereich zwischen der Sensoreinheit und einem Innenraum mindestens eine Abweisvorrichtung angeordnet ist, welche in einer Unfallsituation eine Bewegung der in Richtung des Innenraums eindringenden Sensoreinheit beeinflusst. Hierdurch soll in einer Unfallsituation die Sensoreinheit vor Beschädigung geschützt bzw. die Schwere der Beschädigung reduziert werden.

Gemäß der DE 10 2013 110 444 A1 wird eine Radarvorrichtung für ein Fahrzeug beschrieben, welche weder das äußere eines Fahrzeugs beeinträchtigt noch den von einer Laservorrichtung abgestrahlten Laserstrahl störend beeinflusst und darüber hinaus bei einem Frontalzusammenstoß nicht beschädigt wird. Eine solche Radarvorrichtung umfasst eine Radareinheit, die an einer inneren Seite eines Kühlergrills des Fahrzeugs angeordnet ist, eine Mehrschicht-Sendeabdeckung, die in die Radareinheit eingepasst ist und an deren Frontfläche eine Mehrzahl von Sendeschichten gebildet sind, durch die ein über die Radareinheit abgestrahlter Laserstrahl geführt wird, und einen Montierabschnitt, der einen Verbindungskörper beinhaltet, welcher die Mehrschicht-Sendeabdeckung mit der Radareinheit verbindet, wobei der Montierabschnitt mit der Fahrzeugkarosserie verbunden ist.

Aufgabe der Erfindung ist es, eine Anordnung eines Sensors an einem oder hinter einem Außenanbauteil, bspw. an einem Stoßfänger anzugeben, so dass bei einer schwachen Kollision mit einer geringen Kollisionsgeschwindigkeit im Niedriggeschwindigkeitsbereich die Beschädigung eines solchen Sensors verhindert wird, indem eine durch die schwache Kollision erfolgte Verschiebung des Sensors wieder rückgängig gemacht wird und damit der Sensor funktionsfähig bleibt.

Diese Aufgabe wird gelöst durch eine Anordnung mit den Merkmalen des Patentanspruchs 1.

Eine solche Anordnung eines eine sensoraktive Fläche aufweisenden Sensors an einem oder hinter einem Außenanbauteil eines Fahrzeugs mit
- einer Sensorführung, mit welcher der Sensor mit einem ersten Strukturelement des Fahrzeugs schwenkbeweglich verbunden und in einer Gebrauchsstellung gehalten ist, und
- einem Rückstellelement, welches ausgebildet ist den Sensor aus einer gegenüber der Gebrauchsstellung verschobenen Position zurück in die Gebrauchsposition zu verschieben,
   zeichnet sich erfindungsgemäß dadurch aus, dass
- der Sensor mittels der Sensorführung schwenkbeweglich in Fahrzeuglängsrichtung verbunden ist,
- ein Abstandsmittel einen maximalen Abstand des Sensors in der Gebrauchsstellung zu einem gegenüber dem ersten Strukturelement in Richtung des Fahrzeuginnenraums versetzten zweiten Strukturelement derart bestimmt, dass die Bewegung des Sensors in Fahrzeuglängsrichtung aus einer in Richtung des Fahrzeuginnenraums verschobenen Position zurück in die Gebrauchsstellung auf den maximalen Abstand zu dem zweiten Strukturelement beschränkt ist, und
- das Rückstellelement ein Federelement ist, welches ausgebildet ist den Sensor aufgrund einer durch eine Kollision in einem Niedriggeschwindigkeitsbereich erzeugten äußeren Krafteinwirkung in Richtung des Fahrzeuginnenraums verschoben ist, zurück in die Gebrauchsstellung zu verschieben.

Bei einer schwachen Kollision, d. h. im Niedriggeschwindigkeitsbereich von weniger als 5 km/h wirkt eine Kollisionskraft direkt oder indirekt auf den Sensor oder direkt auf das Außenanbauteil und bewirkt eine Verschiebung des Sensors in Richtung des Fahrzeuginnenraums, ohne dass derselbe beschädigt wird. Diese Verschiebung wird dadurch ermöglicht, dass der Sensor mittels einer Sensorführung mit einem ersten Strukturelement, vorzugsweise ein Stoßfängerquerträger in Fahrzeuglängsrichtung verschwenkbar verbunden ist. Nach der Kollision, d. h. wenn die äußere Kraft nicht mehr auf den Sensor oder das Außenanbauteil einwirkt, wird der Sensor mittels des Rückstellelementes wieder in seine ursprüngliche Position, d. h. in die Gebrauchsstellung zurückgeschoben und ist weiterhin voll funktionsfähig.

Die zusätzliche Anbindung des Sensors an ein bspw. als Montageträger oder Schlossstütze ausgebildetes zweites Strukturelement mittels eines Abstandsmittels stellt sicher, dass der Sensor exakt in seine ursprüngliche Stellung, nämlich die Gebrauchsstellung zurück verschoben wird, unabhängig davon, ob das erste Strukturelement durch die Kollision deformiert oder nicht deformiert ist. Dies bedeutet, dass der Sensor selbst dann in diese Gebrauchsstellung mittels des Rückstellelementes zurückverschoben wird, wenn das erste Strukturelement durch die schwache Kollision leicht deformiert und geringfügig in Richtung des Fahrzeuginneren verschoben ist, da das zweite Strukturelement gegenüber dem ersten Strukturelement Richtung des Fahrzeuginnenraums versetzt ist und daher bei solchen schwachen Kollisionen nicht deformiert wird. Damit wird durch das Abstandsmittel sichergestellt, dass unabhängig von dem durch die Kollision erzeugten Zustand des ersten Strukturelementes der Sensor aus der verschobenen Position wieder in dessen Gebrauchsstellung zurück verschoben wird.

Nach einer vorteilhaften Weiterbildung der Erfindung ist das Abstandsmittel als Zugband ausgebildet, mit welchem der Sensor mit dem zweiten Strukturelement des Fahrzeugs derart verbunden ist, dass die Länge des Zugbandes die Gebrauchsstellung des Sensors bestimmt. Eine solche Realisierung des Abstandsmittels ist konstruktiv einfach realisierbar.

Eine andere bevorzugte Ausführungsform der Erfindung sieht vor, dass
- das Abstandsmittel als eine abstandsveränderliche Verbindung des Sensors mit dem zweiten Strukturelement herstellende Zugstange ausgebildet ist,
- die Zugstange ein Rastmittel aufweist, welches ausgebildet ist mit dem zweiten Strukturelement oder mit dem Sensor eine abstandsfixierende Verbindung in der Gebrauchsstellung des Sensors herzustellen.

Eine solche Zugstange mit Rastmittel stellt eine funktionssichere Realisierung des Abstandsmittels dar.

Vorzugsweise ist bei dieser Realisierung des Abstandsmittels vorgesehen, dass
- die Zugstange mit einem Ende mit dem Sensor verbunden ist, und
- die Zugstange mit dem anderen Ende mittels des Rastmittels derart mit dem zweiten Strukturelement verbunden ist, dass in der Gebrauchsstellung des Sensors das Rastmittel mit dem zweiten Strukturelement verrastet.

Weiterhin ist es besonders vorteilhaft, wenn weiterbildungsgemäß das Abstandsmittel mit einem Einstellelement zur Einstellung des Abstandes zwischen dem Sensor in der Gebrauchsstellung und dem zweiten Strukturelement ausgebildet ist.

Nach einer weiteren Ausgestaltung der Erfindung ist es vorgesehen, dass
- die Sensorführung als Gelenkkinematik ausgebildet ist,
- der Sensor über Gestängeteile der Gelenkkinematik mit dem ersten Strukturelement des Fahrzeugs verbunden ist, wobei mit dem Verschieben des Sensors aus der Gebrauchslage die Gestängeteile verschwenkbar sind, und
- das Rückstellelement als eine Rückstellkraft erzeugendes Element einerseits an dem ersten Strukturelement und andererseits an einem Gestängeteil oder an dem Sensor angebunden ist, wobei mit der Verschiebung des Sensors aus der Gebrauchsstellung eine den Sensor in die Gebrauchsstellung zurückstellende Rückstellkraft mittels des Elementes erzeugbar ist.

Weitere Vorteile, Merkmale und Einzelheiten der Erfindung ergeben sich aus der nachfolgenden Beschreibung bevorzugter Ausführungsformen sowie anhand der Zeichnungen. Dabei zeigen:
- Figur 1: eine schematische Darstellung eines ersten Ausführungsbeispiels der erfindungsgemäßen Anordnung, und
- Figur 2: eine schematische Darstellung eines zweiten Ausführungsbeispiels der erfindungsgemäßen Anordnung.

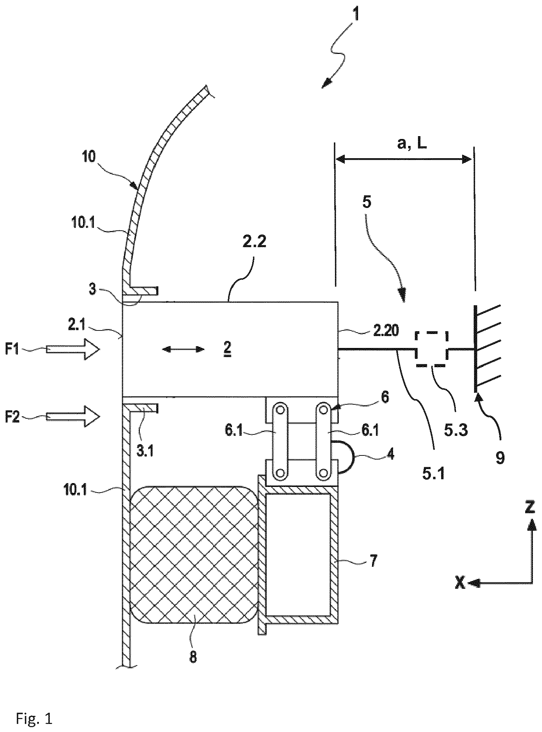

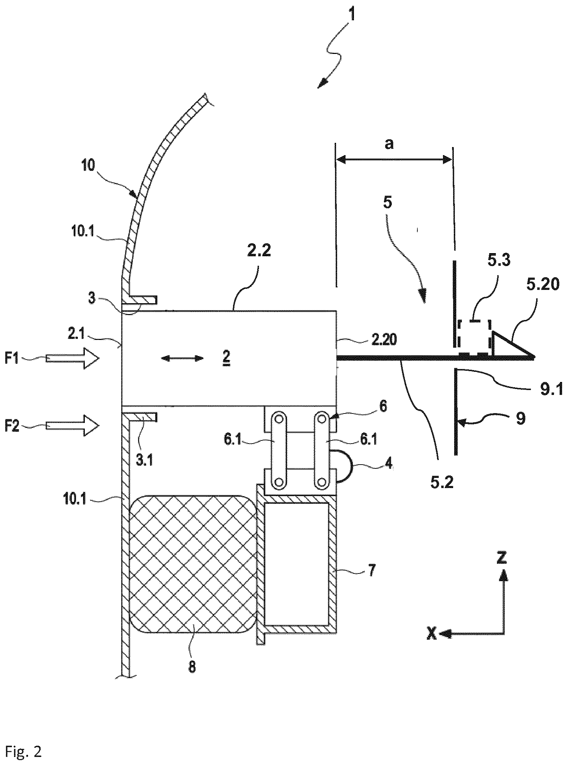

Die Ausführungsbeispiele der erfindungsgemäßen Anordnung 1 gemäß den Figuren 1 und 2 werden beispielhaft an einem frontseitigen Stoßfänger als Außenanbauteil 10 eines Fahrzeugs beschrieben. Dieses Außenanbauteil 10 weist eine Fahrzeugaußenhaut 10.1 auf, die auch als Kühlerschutzgitter oder als Stoßfängerüberzug realisierbar ist.

Gemäß den Figuren 1 und 2 ist ein bspw. als Laserscanner ausgebildeter Sensor 2 der Anordnung 1 mittels einer als Gelenkkinematik ausgebildeten Sensorführung 6 in einer Sensoröffnung 3 der Fahrzeugaußenhaut 10.1 montiert. Die Sensoröffnung 3 wird von einer aktiven Sensorfläche 2.1 des Sensors 2 flächenbündig mit der die Sensoröffnung 3 umgebenden Fahrzeugaußenhaut 10.1 verschlossen.

Alternativ zur Flächenbündigkeit der aktiven Sensorfläche 2.1 des Sensors 2 mit der Sensoröffnung 3 kann sich der Sensor 2 auch hinter einer Fahrzeugaußenhaut 10.1 (mit oder ohne Abstand zu derselben sowie mit oder ohne eine Sensoröffnung 3) befinden oder gegenüber einer größeren Sensoröffnung in der Fahrzeugaußenhaut vor- oder zurückverlagert angeordnet sein.

Die Sensoröffnung 3 umfasst eine die Sensoröffnung 3 bildende Umfangswandung 3.1. Die innere Umfangsfläche der Umfangswandung 3.1 ist an die äußere Kontur eines Gehäuses 2.2 des Sensors 2 derart angepasst, dass der Sensor 2 aus der Gebrauchsstellung in Fahrzeuglängsrichtung verschiebbar ist.

Die Verschiebbarkeit des Sensors 2 und somit auch die Halterung des Sensors 2 in dessen Gebrauchsstellung wird mittels einer als Gelenkkinematik ausgeführten Sensorführung 6 realisiert. Diese Gelenkkinematik 6 umfasst Gestängeteile 6.1 mit mindestens zwei Streben, die den Sensor 2 an dem der aktiven Sensorfläche 2.1 gegenüberliegenden Ende mit einem in Fahrzeughochrichtung (z-Richtung) unter dem Sensor 2 liegenden und als Stoßfängerquerträger ausgebildeten ersten Strukturelement 7 verbinden, so dass mit einer Verschiebung des Sensors 2 aus der Gebrauchsstellung entsprechend der Darstellung gemäß den Figuren 1 und 2 die Gestängeteile 6.1 gegenüber dem als Montageträger oder Schlossstütze ausgebildeten ersten Strukturelement 7 verschwenkt werden.

Ferner umfasst diese Anordnung 1 gemäß den Figuren 1 und 2 ein als Federelement ausgeführtes Rückstellelement 4, welches einerseits an dem ersten Strukturelement 7 und andererseits entweder an einer Strebe der Gestängeteile 6.1 oder an einem Gehäuse 2.2 des Sensors 2 angebunden ist. Damit wird von dem Federelement eine Rückstellkraft erzeugt, wenn bei einer Verschiebung des Sensors 2 aus dessen Gebrauchsstellung in Richtung des Fahrzeuginneren (x-Richtung) die Gestängeteile 6.1 entsprechend verschwenkt werden.

Zwischen dem als Stoßfängerquerträger ausgebildeten ersten Strukturelement 7 und der Fahrzeugaußenhaut 10.1 ist ein Fußgängerschutzdeformationselement 8 angeordnet.

Die Gebrauchsstellung des Sensors 2 gemäß den Figuren 1 und 2 ist durch den maximalen Abstand a von dessen Rückseite 2.20 zu einem zweiten Strukturelement 9 gegeben und wird durch ein Abstandsmittel 5 bestimmt, welches nach Figur 1 als Zugband 5.1 und nach Figur 2 als Zugstange 5.2 mit einem Rastmittel 5.20 ausgebildet ist. Das zweite Strukturelement 9 ist gegenüber dem ersten Strukturelement 7 in Richtung des Fahrzeuginneren versetzt, so dass es bei einer schwachen Kollision im Niedriggeschwindigkeitsbereich nicht deformiert wird.

Nach Figur 1 verbindet das Zugband 5.1 die Rückseite 2.20 der Sensors 2 mit dem zweiten Strukturelement 9 des Fahrzeugs. In der Gebrauchsstellung des Sensors 2 gemäß Figur 1 ist das Zugband 5.1 gespannt und weist eine Länge L auf, die den maximalen Abstand a der Rückseite 2.20 des Sensors 2 zum zweiten Strukturelement 9 des Fahrzeugs bestimmt. Mittels eines in das Zugband 5.1 eingebundenen Einstellelementes 5.3 kann die Länge L des Zugbandes 5.1 vor einer Fahrzeugauslieferung im Werk des Fahrzeugherstellers oder bei einer Fahrzeugwartung eingestellt werden.

Das Abstandsmittel 5 gemäß Figur 2 ist anstelle des Zugbandes 5.1 nach Figur 1 mit einer in Fahrzeuglängsrichtung sich erstreckenden Zugstange 5.2 ausgeführt, die mit deren frontseitigen Ende an der Rückseite 2.20 des Sensors 2 befestigt und am gegenüberliegenden Ende mit einem Rastmittel 5.20 ausgebildet ist. Diese Zugstange 5.2 ist durch eine bspw. in einer Trägerwand angeordneten Öffnung 9.1 eines zweiten Strukturelementes 9 des Fahrzeugs hindurchgeführt, wobei das nasenartig ausgeführte Rastmittel 5.20 die Umrandung der Öffnung 9.1 hintergreift und damit den maximalen Abstand a zwischen der Rückseite 2.20 des Sensors 2 und dem zweiten Strukturelement 9 bestimmt. Nach Figur 2 liegt das nasenartig ausgeführte Rastmittel 5.20 nicht direkt an dem zweiten Strukturelement 9, sondern an einem Einstellelement 5.3 an, welches zusätzlich vorgesehen werden kann und dazu dient, den die Gebrauchsstellung des Sensors 2 definierenden maximalen Abstand a zwischen der Rückseite 2.20 des Sensors 2 und dem zweiten Strukturelement 9 des Fahrzeugs vor einer Fahrzeugauslieferung im Werk des Fahrzeugherstellers oder bei einer Fahrzeugwartung einzustellen.

Bei einer schwachen Kollision des Fahrzeugs mit einem anderen Fahrzeug, einer Person oder einem Gegenstand in Richtung des Fahrzeuginneren, also in Fahrzeuglängsrichtung entgegen der x-Richtung wirkt eine Kraft F1 direkt auf die aktive Sensorfläche 2.1 des Sensors 2 oder eine Kraft F2 auf die Fahrzeugaußenhaut 10.1 im Bereich der Sensoröffnung 3. Als schwache Kollision wird eine Kollision im Niedriggeschwindigkeitsbereich bezeichnet, bspw. bei einer Fahrzeuggeschwindigkeit von kleiner als 5 km/h.

Durch die Kräfte F1 oder F2 wird der Sensor 2 entweder direkt oder über das Fußgängerschutzdeformationselement 8 und das erste Strukturelement 7 aus seiner Gebrauchslage gemäß den Figuren 1 und 2 in Richtung des Fahrzeuginneren verschoben, wobei im Falle der erzeugten Kollisionskraft F2 das erste Strukturelement 7 bleibend verformt wird. Das zweite Strukturelement 9, an welchem das Zugband 5.1 befestigt ist bzw. mit der Öffnung 9.1 zum Hindurchführen der Zugstange 5.2 ausgebildet ist, weist jedoch die Eigenschaft auf, dass es bei solchen schwachen Kollisionen im Niedriggeschwindigkeitsbereich unverformt bleibt.

Diese Bewegung des Sensors 2 aus seiner Gebrauchslage in Richtung des Fahrzeuginneren wird mittels der als Gelenkkinematik ausgeführten Sensorführung 6 ermöglicht. Aufgrund der elastischen Eigenschaft der Fahrzeugaußenhaut 10.1 formt sich diese nach dem Ende der Belastung durch die Kraft F1 oder F2 in die ursprüngliche Form zurück.

Gemäß Figur 1 wird der Sensor 2 durch das an dem Sensor 2 oder der Sensorführung 6 angreifende Rückstellelement 4 wieder in Richtung der Gebrauchsstellung zurück verschoben, bis das Zugband 5.1 gespannt ist und damit der Sensor 2 mit dem seine Gebrauchslage kennzeichnenden maximalen Abstand a von dem unverformten zweiten Strukturelement 9 des Fahrzeugs beabstandet ist. Damit hat der Sensor 2 seine Gebrauchsstellung erreicht und ist nach der Kollision wieder funktionsbereit.

Durch die Länge L des Zugbandes 5.1 wird der mögliche Rückstellungsweg des Sensors 2 vorgegeben und ist somit unabhängig von der Position des gegebenenfalls leicht deformierten und als Stoßfängerquerträger ausgeführten ersten Strukturelementes 7.

Gemäß Figur 2 wird mit der Bewegung des Sensors 2 in Richtung des Fahrzeuginneren die Zugstange 5.2 durch die Öffnung 9.1 in Richtung des Fahrzeuginneren hindurchgeschoben. Aufgrund der elastischen Eigenschaft der Fahrzeugaußenhaut 10.1 formt sich diese nach dem Ende der Belastung durch die Kraft F1 oder F2 in die ursprüngliche Form zurück. Durch das an dem Sensor 2 oder der Gelenkkinematik 6 angreifende Rückstellelement 4 wird der Sensor 2 wieder in Richtung der Gebrauchsstellung zurück verschoben, bis das nasenartiger Rastmittel 5.20 den Rand der Öffnung 9.1 bzw. das Einstellelement 5.3 hintergreift und damit der Sensor 2 mit dem seine Gebrauchslage kennzeichnenden maximalen Abstand a von dem unverformten zweiten Strukturelement 9 des Fahrzeugs beabstandet ist. Damit hat der Sensor 2 seine Gebrauchsstellung erreicht und ist nach der Kollision wieder funktionsbereit. Die Begrenzung des Rückstellungsweges erfolgt dabei formschlüssig zwischen dem nasenartigen Rastmittel 5.20 der Zugstange 5.2 und dem undeformierten zweiten Strukturelement 9 des Fahrzeugs und ist damit unabhängig von der Position des gegebenenfalls leicht deformierten und als Stoßfängerquerträger ausgeführten ersten Strukturelementes 7.

Damit die Schwenkbewegung des Sensors 2 mittels der als Gelenkkinematik ausgeführten Sensorführung 6 aus dessen Kollisionsposition auch bei in Richtung des Fahrzeuginneren deformierten ersten Strukturelement 7 zurück in die Gebrauchsstellung ermöglicht wird, ist die Gelenkkinematik derart ausgeführt, dass eine Verschwenkung des Sensors 2 relativ zum ersten Strukturelement 7 sowohl in frontseitige als auch in rückseitiger Richtung des Fahrzeugs möglich ist. Außerdem ist zwischen der Umfangswandung 3.1 der Sensoröffnung 3 und der äußeren Kontur der Sensorgehäuses 2.2 ausreichend maximalen Abstand vorgesehen, so dass bei einer Schwenkbewegung des Sensors 2 gegenüber dem ersten Strukturelement 7 auch eine Ausgleichsbewegung in Fahrzeughochrichtung (z-Richtung) erfolgen kann.

Die als Gelenkkinematik ausgeführte Sensorführung 6 gemäß den Figuren 1 und 2 kann auch derart ausgeführt werden, dass die Anbindung der Gestängeteile 6.1 an den Sensor 2 starr und lediglich die Anbindung an das Strukturelement 7 gelenkförmig ausgebildet ist. In diesem Fall sind die beiden vorhandenen Drehachsen der Gestängeteile 6.1 an dem Strukturelement 7 des Fahrzeugs zu einer Drehachse zusammen zu fassen, so dass sich der Gesamtverbund aus Sensor 2 und Gestängeteilen 6.1 lediglich um diese eine Drehachse verschwenkt. Damit führt der Sensor 2 bei einer Verschiebung aus dessen Gebrauchsstellung entgegen den Ausführungen nach den Figuren 1 und 2 keine translatorische Bewegung sondern eine Drehbewegung aus.

### BEZUGSZEICHEN:

- 1: Anordnung
- 2: Sensor
- 2.1: sensoraktive Fläche des Sensors 2
- 2.2: Gehäuse des Sensors 2
- 2.20: Rückseite des Sensors 2
- 3: Sensoröffnung
- 3.1: Umfangswandung der Sensoröffnung 3
- 4: Rückstellelement
- 5: Abstandsmittel
- 5.1: Zugband
- 5.2: Zugstange
- 5.20: Rastmittel
- 5.3: Einstellelement
- 6: Sensorführung
- 6.1: Gestängeteile
- 7: erstes Strukturelement
- 8: Fußgängerschutz-Deformationselement
- 9: zweites Strukturelement

- 10: Außenanbauteil eines Fahrzeugs
- 10.1: Fahrzeugaußenhaut

- a: maximaler Abstand

## Patentansprüche

1. Anordnung (1) eines eine sensoraktive Fläche (2.1) aufweisenden Sensors (2) an einem oder hinter einem Außenanbauteil (10) eines Fahrzeugs mit
- einer Sensorführung (6), mit welcher der Sensor (2) mit einem ersten Strukturelement (7) des Fahrzeugs schwenkbeweglich verbunden und in einer Gebrauchsstellung gehalten ist, und
- einem Rückstellelement (4), welches ausgebildet ist den Sensor (2) aus einer gegenüber der Gebrauchsstellung verschobenen Position zurück in die Gebrauchsposition zu verschieben,
**dadurch gekennzeichnet, dass**
- der Sensor (2) mittels der Sensorführung (6) schwenkbeweglich in Fahrzeuglängsrichtung (x-Richtung) verbunden ist,
- ein Abstandsmittel (5) einen maximalen Abstand (a) des Sensors (2) in der Gebrauchsstellung zu einem gegenüber dem ersten Strukturelement (7) in Richtung des Fahrzeuginnenraums versetzten zweiten Strukturelement (9) derart bestimmt, dass die Bewegung des Sensors (2) in Fahrzeuglängsrichtung (x-Richtung) aus einer in Richtung des Fahrzeuginnenraums verschobenen Position zurück in die Gebrauchsstellung auf den maximalen Abstand (a) zu dem zweiten Strukturelement (9) beschränkt ist, und
- das Rückstellelement (4) ein Federelement ist, welches ausgebildet ist den Sensor (2) aufgrund einer durch eine Kollision in einem Niedriggeschwindigkeitsbereich erzeugten äußeren Krafteinwirkung (F1, F2) in rückwärtige Richtung verschoben ist, zurück in die Gebrauchsstellung zu verschieben.

2. Anordnung (1) nach Anspruch 1, **dadurch gekennzeichnet, dass** das Abstandsmittel (5) als Zugband (5.1) ausgebildet ist, mit welchem der Sensor (2) mit dem zweiten Strukturelement (9) des Fahrzeugs derart verbunden ist, dass die Länge (L) des Zugbandes (5.1) die Gebrauchsstellung des Sensors (2) bestimmt.

3. Anordnung nach Anspruch 1, **dadurch gekennzeichnet, dass**
- das Abstandsmittel (5) als eine abstandsveränderliche Verbindung des Sensors (2) mit dem zweiten Strukturelement (9) herstellende Zugstange (5.2) ausgebildet ist, und
- die Zugstange (5.2) ein Rastmittel (5.20) aufweist, welches ausgebildet ist mit dem zweiten Strukturelement (9) oder mit dem Sensor (2) eine abstandsfixierende Verbindung in der Gebrauchsstellung des Sensors (2) herzustellen.

4. Anordnung (1) nach Anspruch 3, **dadurch gekennzeichnet, dass**
- die Zugstange (5.2) mit einem Ende mit dem Sensor (2) verbunden ist, und
- die Zugstange (5.2) mit dem anderen Ende mittels des Rastmittels (5.20) derart mit dem zweiten Strukturelement (9) verbunden ist, dass in der Gebrauchsstellung des Sensors (2) das Rastmittel (5.20) mit dem zweiten Strukturelement (9) verrastet.

5. Anordnung (1) nach einem der vorhergehenden Ansprüche, **dadurch gekennzeichnet, dass** das Abstandsmittel (5) mit einem Einstellelement (5.3) zur Einstellung des Abstandes (a) zwischen dem Sensor (2) in der Gebrauchsstellung und dem zweiten Strukturelement (9) ausgebildet ist.

6. Anordnung (1) nach einem der vorhergehenden Ansprüche, **dadurch gekennzeichnet, dass**
- die Sensorführung (6) als Gelenkkinematik ausgebildet ist,
- der Sensor (2) über Gestängeteile (6.1) der Gelenkkinematik mit dem ersten Strukturelement (7) des Fahrzeugs verbunden ist, wobei mit dem Verschieben des Sensors (2) aus der Gebrauchslage die Gestängeteile (6.1) verschwenkbar sind, und
- das Rückstellelement (4) als eine Rückstellkraft erzeugendes Element einerseits an dem ersten Strukturelement (7) und andererseits an einem Gestängeteil (6.1) oder an dem Sensor (2) angebunden ist, wobei mit der Verschiebung des Sensors (2) aus der Gebrauchsstellung eine den Sensor (2) in die Gebrauchsstellung zurückstellende Rückstellkraft mittels des Rückstellelementes (4) erzeugbar ist.

## Claims

1. Arrangement (1) of a sensor (2) comprising a sensor active surface (2.1) on or behind a vehicle outer add-on part (10) having
- a sensor guide (6) with which the sensor (2) is pivotally connected to a first structure element (7) of the vehicle and is held in a usage position, and
- a restoring element (4) which is configured to displace the sensor (2) from a position which is displaced with regard to the usage position back into the usage position, **characterised in that**
- the sensor (2) is connected by means of the pivot guide (6) pivotally in vehicle longitudinal direction (x Richtung),
- a spacer means (5) specifies a maximum spacing (a) of the sensor (2) in the usage position from a second structure element (9), offset with regard to the structure element (7) in the direction of the vehicle interior, such that the movement of the sensor (2) in vehicle longitudinal direction (x Richtung) out of a position displaced in the direction of the vehicle interior back into the usage position is limited to the maximum spacing (a) from the second structure element (9), and
- the restoring element (4) is a spring element which is designed to displace the sensor (2), which has been displaced in the rearwards direction as a result of an external exertion of force (F1, F2) generated by a collision in a low speed range, back into the usage position.

2. Arrangement (1) according to claim 1, **characterised in that** the spacing means (5) is designed as a strap (5.1) with which the sensor (2) is connected to the second structure element (9) of the vehicle such that the length (L) of the strap (5.1) determines the usage position of the sensor (2).

3. Arrangement according to claim 1, **characterised in that**
- the spacing means (5) is designed as a tension rod (5.2) creating a variablyspaced connection of the sensor (2) to the second structure element (9), and
- the tension rod (5.2) has a latching means (5.20) which is configured to create, with the second structure element (9) or with the sensor (2) a spacing-fixing connection in the usage position of the sensor (2).

4. Arrangement (1) according to claim 3, **characterised in that**
- the tension rod (5.2) is connected with one end to the sensor (2), and
- the tension rod (5.2) is connected with the other end by means of the latching means (5.20) to the second structure element (9) such that in the usage position of the sensor (2) the latching means (5.20) latches together with the second structure element (9).

5. Arrangement (1) according to any of the preceding claims, **characterised in that** the spacing means (5) is designed with a setting element (5.3) for setting the spacing (a) between the sensor (2) in the usage position and the second structure element (9).

6. Arrangement (1) according to any of the preceding claims, **characterised in that**
- the sensor guide (6) is designed as an articulated kinematics.
- the sensor (2) is connected via rod parts (6.1) of the articulated kinematics to the first structure element (7) of the vehicle, wherein when the sensor (2) is displaced out of the usage position, the rod parts (6.1) are pivotable, and
- the restoring element (4), as an element generating a restoring force, is connected on the one hand to the first structure element (7) and on the other hand to a rod part (6.1) or to the sensor (2), wherein when the sensor (2) is displaced out of the usage position, a restoring force restoring the sensor (2) into the usage position can be generated by means of the restoring element (4).

## Revendications

1. Agencement (1) d'un capteur (2) présentant une surface active (2.1) au niveau d'un ou derrière un composant extérieur (10) d'un véhicule avec
- un guide de capteur (6), avec lequel le capteur (2) est relié à un premier élément structurel (7) du véhicule de manière mobile en pivotement et est maintenu dans une position d'utilisation, et
- un élément de rappel (4) qui est réalisé afin de ramener le capteur (2) d'une position déplacée par rapport à la position d'utilisation dans la position d'utilisation, **caractérisé en ce que**
- le capteur (2) est relié au moyen du guide de capteur (6) de manière mobile en pivotement dans la direction longitudinale du véhicule (direction x),
- un moyen d'écartement (5) détermine une distance maximale (a) du capteur (2) dans la position d'utilisation par rapport à un second élément structurel (9) en déport par rapport au premier élément structurel (7) en direction de l'espace intérieur de véhicule, de telle manière que le déplacement du capteur (2) soit limité dans la direction longitudinale du véhicule (direction x) d'une position déplacée en direction de l'espace intérieur de véhicule de nouveau dans la position d'utilisation à la distance maximale (a) du second élément structurel (9), et
- l'élément de rappel (4) est un élément formant ressort qui est réalisé afin de ramener le capteur (2) sous l'une action d'une force (F1, F2) extérieure générée par une collision dans une plage de vitesse basse en direction arrière, dans la position d'utilisation.

2. Agencement (1) selon la revendication 1, **caractérisé en ce que** le moyen d'écartement (5) est réalisé comme bande de traction (5.1), avec laquelle le capteur (2) est relié au second élément structurel (9) du véhicule de telle manière que la longueur (L) de la bande de traction (5.1) détermine la position d'utilisation du capteur (2).

3. Agencement selon la revendication 1, **caractérisé en ce que**
- le moyen d'écartement (5) est réalisé comme tige de traction (5.2) établissant une liaison à distance modifiable du capteur (2) avec le second élément structurel (9), et
- la tige de traction (5.2) présente un moyen d'encliquetage (5.20) qui est réalisé afin d'établir avec le second élément structurel (9) ou avec le capteur (2) une liaison fixant la distance dans la position d'utilisation du capteur (2).

4. Agencement (1) selon la revendication 3, **caractérisé en ce que**
- la tige de traction (5.2) est reliée à une extrémité au capteur (2), et
- la tige de traction (5.2) est reliée à l'autre extrémité à l'aide du moyen d'encliquetage (5.20) au second élément structurel (9) de telle manière que dans la position d'utilisation du capteur (2), le moyen d'encliquetage (5.20) s'encliquette avec le second élément structurel (9).

5. Agencement (1) selon l'une quelconque des revendications précédentes, **caractérisé en ce que** le moyen d'écartement (5) est réalisé avec un élément de réglage (5.3) pour le réglage de la distance (a) entre le capteur (2) dans la position d'utilisation et le second élément structurel (9).

6. Agencement (1) selon l'une quelconque des revendications précédentes, **caractérisé en ce que**
- le guide de capteur (6) est réalisé comme cinématique articulée,
- le capteur (2) est relié par le biais de parties de tringlerie (6.1) de la cinématique articulée au premier élément structurel (7) du véhicule, dans lequel les parties de tringlerie (6.1) sont pivotantes avec le déplacement du capteur (2) depuis la position d'utilisation, et
- l'élément de rappel (4) est lié comme élément générant une force de rappel d'une part au premier élément structurel (7) et d'autre part à une partie de tringlerie (6.1) ou au capteur (2), dans lequel avec le déplacement du capteur (2) depuis la position d'utilisation une force de rappel remettant le capteur (2) dans la position d'utilisation peut être générée au moyen de l'élément de rappel (4).
